# FASCICULE DE BREVET EUROPEEN

(11) **EP 3 449 099 B1**
(45) Date de publication et mention de la délivrance du brevet: **11.03.2020**
(21) Numéro de dépôt: 17725674.0
(22) Date de dépôt: 27.04.2017
(51) Int. Cl.: F01D 9/06, F02C 7/32

(54) **BRAS POUR CARTER DE TURBOMACHINE COMPRENANT UNE PIÈCE ADDITIONNELLE AMOVIBLE**
ARM FÜR EIN TURBOMASCHINENGEHÄUSE MIT EINEM ABNEHMBAREN ZUSATZTEIL
ARM FOR A TURBOMACHINE CASING COMPRISING A REMOVABLE ADDITIONAL PART

(30) Priorité: 28.04.2016 FR 1653827
(43) Date de publication de la demande: 06.03.2019
(73) Titulaire: Safran Aircraft Engines, 75015 Paris (FR)
(72) Inventeur: JUIGNE, Sébastien, Nicolas, 77550 Moissy-Crayamel (FR); CONTAL, Kévin, Michel, Robert, 77550 Moissy-Crayamel (FR); GAILLOT, Mathieu, 77550 Moissy-Crayamel (FR); MARLIN, François, Marie, Paul, 77550 Moissy-Crayamel (FR); NICAISE, Stève, Marcel, 77550 Moissy-Crayamel (FR)
(74) Mandataire: Brevalex
(86) Numéro de dépôt international: PCT/FR2017/050998
(87) Numéro de publication internationale: WO 2017/187091

(56) Documents cités:
- WO-A1-2012/114029
- WO-A1-2013/004964
- WO-A1-2015/189522

## Description

### DOMAINE TECHNIQUE

La présente invention se rapporte au domaine des turbomachines pour aéronefs, et concerne plus particulièrement un bras de carter destiné à loger un arbre secondaire de transmission, ainsi qu'une turbomachine comportant un tel bras de carter.

L'invention concerne encore un procédé de démontage d'un palier destiné au guidage d'un arbre de transmission d'une telle turbomachine.

### ÉTAT DE LA TECHNIQUE ANTÉRIEURE

Dans une turbomachine pour aéronef, un arbre de transmission relie en général un arbre de rotor de la turbomachine à des équipements auxiliaires tels qu'un démarreur de la turbomachine.

L'arbre de rotor est un arbre centré sur l'axe de la turbomachine et reliant un compresseur agencé en amont d'une chambre de combustion, à une turbine agencée en aval de la chambre de combustion, d'une manière bien connue.

L'arbre de transmission est parfois composé d'un arbre primaire de transmission et d'un arbre secondaire de transmission montés bout-à-bout et accouplés l'un à l'autre au niveau d'un palier assurant le guidage et le centrage de l'arbre de transmission.

L'arbre secondaire de transmission est en général logé, éventuellement avec d'autres servitudes, dans un bras agencé au sein d'une couronne d'aubes de redressement d'un flux circulant dans la turbomachine intégrée à un carter, couramment dénommé « carter intermédiaire ». Le bras joue un rôle structural étant donné qu'il relie une virole externe à un moyeu du carter et participe ainsi à la cohésion mécanique de l'ensemble du carter intermédiaire.

Toutefois, le palier de l'arbre de transmission requiert des opérations de maintenance régulières qui nécessitent le démontage de ce palier.

Or, démonter ce palier requiert de démonter le bras, ce qui impose la dépose de la turbomachine.

Ces opérations se révèlent ainsi complexes, longues, et donc très coûteuses. Un bras pour carter de turbomachine selon l'art antérieure est divulgué dans WO2012/114029.

### EXPOSÉ DE L'INVENTION

L'invention a notamment pour but d'apporter une solution simple, économique et efficace à ce problème.

Elle propose à cet effet un bras pour carter de turbomachine, présentant une première extrémité longitudinale pourvue de premiers moyens de fixation destinés à être fixés à une virole externe de carter, et une seconde extrémité longitudinale pourvue de deuxièmes moyens de fixation destinés à être fixés à un moyeu de carter, le bras comprenant un logement d'arbre débouchant au niveau de la première extrémité longitudinale du bras pour loger un arbre secondaire de transmission de turbomachine.

Selon l'invention, le bras comprend un corps formé d'une base et d'un montant. La base intègre les premiers moyens de fixation, et présente une première portion, agencée du côté d'une première extrémité latérale du bras, et une seconde portion, agencée du côté d'une seconde extrémité latérale du bras opposée à la première extrémité latérale et intégrant une première section du logement d'arbre. De plus, le montant présente une première extrémité longitudinale raccordée à la première portion de la base, et une seconde extrémité longitudinale opposée à la première extrémité longitudinale et intégrant une partie des deuxièmes moyens de fixation. Le bras comprend en outre une pièce additionnelle fixée de manière amovible sur le corps. La pièce additionnelle intègre une deuxième section du logement d'arbre et délimite un logement de palier, débouchant dans le logement d'arbre et destiné à loger un palier. Le bras comprend en outre une cale interposée entre la base et la pièce additionnelle, et intégrant une troisième section du logement d'arbre. Enfin, le montant et la pièce additionnelle sont mutuellement en contact par l'intermédiaire de surfaces de contact conformées pour permettre un déplacement de la pièce additionnelle en direction de la base lorsque le bras est dépourvu de la cale.

Un démontage de la pièce additionnelle permet ainsi d'accéder au palier et donc d'effectuer des opérations de maintenance du palier sans avoir à démonter le carter intermédiaire, et donc sans avoir à déposer une turbomachine équipée de ce carter intermédiaire.

A cet effet, un retrait préalable de la cale permet de déplacer la pièce additionnelle en direction de la base du corps.

Dans un mode de réalisation préféré de l'invention, les surfaces de contact sont conformées pour permettre un déplacement de la pièce additionnelle le long du montant en direction de la base parallèlement à un axe du logement d'arbre, lorsque le bras est dépourvu de la cale.

A cet effet, les surfaces de contact s'étendent de préférence parallèlement à l'axe du logement d'arbre. En variante, ces surfaces de contact peuvent être inclinées.

Le bras présente de préférence les caractéristiques selon lesquelles :
- les surfaces de contact comprennent une première surface formée sur le montant et une deuxième surface formée sur la pièce additionnelle et appliquée contre la première surface,
- le montant comporte une platine de fixation faisant saillie au-delà de la première surface,
- la pièce additionnelle présente un premier évidement débouchant dans la deuxième surface, et dans lequel la platine de fixation est agencée,
- le premier évidement s'étend au-delà de la platine de fixation dans une direction d'éloignement de la base parallèle à l'axe du logement d'arbre,
- la platine de fixation comporte au moins un premier orifice de fixation, la pièce additionnelle comporte au moins un deuxième orifice de fixation,
- le bras comporte en outre au moins un premier organe de fixation traversant conjointement le premier orifice de fixation et le deuxième orifice de fixation.

Un retrait de la cale autorise ainsi un glissement de la pièce additionnelle le long de la platine de fixation en direction de la base.

De plus, la cale comporte de préférence :
- une troisième surface appliquée contre la première surface,
- un deuxième évidement débouchant dans la troisième surface, et dans lequel la platine de fixation est agencée, et
- au moins un troisième orifice de fixation.

Dans ce cas, la platine de fixation comporte avantageusement au moins un quatrième orifice de fixation en regard du troisième orifice de fixation, et le bras comporte en outre au moins un deuxième organe de fixation traversant conjointement le troisième orifice de fixation et le quatrième orifice de fixation.

En outre, le bras comporte de préférence un obturateur agencé dans le premier évidement à côté de la platine de fixation de manière à obturer une région de l'évidement située au-delà de la platine de fixation dans la direction d'éloignement de la base.

L'obturateur permet d'assurer la continuité d'une surface externe du bras au niveau du premier évidement.

De préférence, la platine de fixation comporte un quatrième orifice de fixation, et présente une quatrième surface, et le premier évidement présente une surface de fond sur laquelle la quatrième surface est appliquée.

De préférence, la pièce additionnelle comporte une cinquième surface située d'un côté opposé à un côté de la deuxième surface, et la base présente une sixième surface située dans le prolongement de la cinquième surface, le bras comprenant en outre une platine d'interface présentant une septième surface appliquée conjointement sur les cinquième et sixième surfaces et fixée sur au moins l'une des cinquième et sixième surfaces.

Une telle platine d'interface permet la fixation d'un kit de passage de servitudes, qui peut être d'un type conventionnel.

Par ailleurs, le logement de palier débouche de préférence dans la seconde extrémité longitudinale du bras.

L'invention concerne également une turbomachine pour aéronef, comprenant :
- un arbre de rotor reliant des aubes de compresseur à des aubes de turbine,
- un canal d'écoulement de flux secondaire,
- un carter comprenant un moyeu de carter agencé radialement vers l'intérieur par rapport au canal d'écoulement de flux secondaire, et une virole externe de carter agencée radialement vers l'extérieur par rapport au canal d'écoulement de flux secondaire,
- un arbre primaire de transmission et un arbre secondaire de transmission agencés bout-à-bout et s'étendant selon une direction orthogonale ou inclinée par rapport à l'arbre de rotor, et
- un palier permettant le guidage des arbres de transmission primaire et secondaire, et dans lequel :
   - le carter comprend un bras du type décrit ci-dessus, dont les premiers moyens de fixation sont fixés à la virole externe de carter et les deuxièmes moyens de fixation sont fixés au moyeu de carter,
   - l'arbre primaire de transmission présente une extrémité radialement interne accouplée à l'arbre de rotor, et une extrémité radialement externe,
   - l'arbre secondaire de transmission présente une extrémité radialement interne accouplée à l'extrémité radialement externe de l'arbre primaire de transmission au niveau du palier,
   - l'arbre secondaire de transmission est logé dans le logement d'arbre du bras, et
   - le palier est logé dans le logement de palier du bras.

Le cas échéant, une étendue du premier évidement au-delà de la platine de fixation, et une étendue de la cale, selon une direction parallèle à l'arbre primaire de transmission, sont de préférence supérieures à une distance de désaccouplement du palier et de l'arbre primaire de transmission.

Ainsi, un déplacement de la pièce additionnelle en direction de la base, parallèlement à l'axe de l'arbre primaire, permet un désaccouplement complet du palier et de l'arbre primaire de transmission. L'opération de retrait du palier est ainsi particulièrement aisée.

L'invention concerne enfin un procédé de démontage du palier d'une turbomachine du type décrit ci-dessus, comprenant les étapes consistant à :
- retirer l'arbre secondaire de transmission depuis la première extrémité du bras,
- retirer la cale,
- démonter la pièce additionnelle, puis
- déplacer la pièce additionnelle vers la base du corps dans un espace précédemment occupé par la cale, puis
- désaccoupler le palier et l'arbre primaire de transmission.

Le cas échéant, le procédé peut comprendre une étape consistant à démonter l'obturateur préalablement à l'étape consistant à déplacer la pièce additionnelle vers la base.

Par ailleurs, le procédé peut comprendre une étape consistant à démonter une platine d'interface préalablement fixée sur la base du corps et sur la pièce additionnelle de manière à prendre en sandwich la pièce additionnelle avec le montant.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1 est une vue schématique en coupe axiale d'une turbomachine pour aéronef d'un type connu ;
- la figure 2 est une vue schématique en perspective d'un carter de la turbomachine de la figure 1, isolé du reste de la turbomachine ;
- la figure 3 est une demi-vue schématique partielle en section axiale et à plus grande échelle de la turbomachine de la figure 1, illustrant le carter de la figure 2 ;
- la figure 4 est une vue schématique partielle en coupe axiale d'une turbomachine selon un mode de réalisation préféré de l'invention, illustrant notamment un bras de carter logeant un arbre secondaire de transmission ;
- la figure 5 est une vue schématique en perspective du bras de la turbomachine de la figure 4, isolé du reste de la turbomachine ;
- la figure 6 est une vue schématique en perspective éclatée du bras de la figure 5 ;
- la figure 7 est une vue schématique en perspective d'un corps du bras de la figure 5 ;
- la figure 8 est une vue schématique en perspective d'une pièce additionnelle du bras de la figure 5 ;
- la figure 9 est une vue schématique en perspective d'une cale du bras de la figure 5 ;
- la figure 10 est une vue schématique en perspective d'une pièce d'interface du bras de la figure 5.

Dans l'ensemble de ces figures, des références identiques peuvent désigner des éléments identiques ou analogues.

### EXPOSÉ DÉTAILLÉ D'UN MODE DE RÉALISATION PRÉFÉRÉ

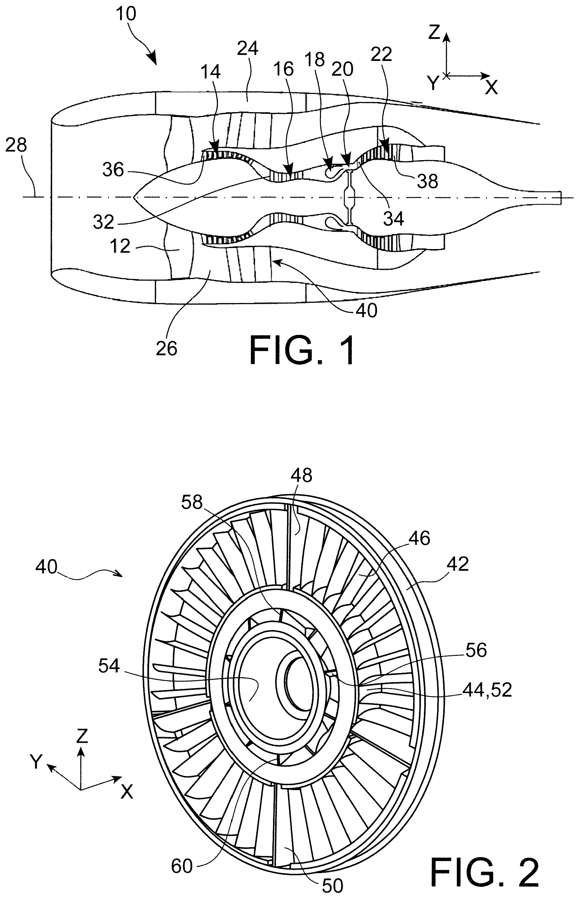

La figure 1 illustre une turbomachine 10 pour aéronef d'un type connu, par exemple un turboréacteur à double flux et à double corps, comportant de manière générale une soufflante 12 destinée à l'aspiration d'un flux d'air se divisant en aval de la soufflante en un flux primaire alimentant un cœur de la turbomachine et un flux secondaire contournant ce cœur. Le cœur de la turbomachine comporte, de manière générale, un compresseur basse pression 14, un compresseur haute pression 16, une chambre de combustion 18, une turbine haute pression 20 et une turbine basse pression 22. La turbomachine est carénée par une nacelle 24 entourant le canal d'écoulement de flux secondaire 26. Les rotors de la turbomachine sont montés rotatifs autour d'un axe longitudinal 28 de la turbomachine.

Dans l'ensemble de cette description, la direction axiale X est la direction de l'axe longitudinal 28 de la turbomachine, la direction verticale Z est une direction orthogonale à la direction axiale X et orientée selon la verticale lorsque la turbomachine équipe un aéronef stationné au sol, et la direction transversale Y est orthogonale aux deux directions précédentes. Par ailleurs, la direction radiale est définie par référence à l'axe 28, tandis que les directions « amont » et « aval » sont définies par référence à l'écoulement général des gaz dans la turbomachine.

D'une manière bien connue, le compresseur haute pression 16 et la turbine haute pression 20 comportent des aubes mobiles 32, 34 reliées au moyen d'un arbre de rotor, couramment dénommé « arbre haute pression ». De manière analogue, le compresseur basse pression 14 et la turbine basse pression 22 comportent des aubes mobiles 36, 38 reliées au moyen d'un autre arbre de rotor, couramment dénommé « arbre basse pression » et s'étendant à l'intérieur de l'arbre haute pression.

La turbomachine comprend un carter intermédiaire 40 agencé axialement entre le compresseur basse pression 14 et le compresseur haute pression 16, et représenté isolé sur la figure 2.

Ce carter intermédiaire 40 comporte une virole externe de carter 42, un moyeu de carter 44, des aubes de redresseur 46 s'étendant depuis la virole externe 42 jusqu'au moyeu 44, ainsi que deux bras 48 et 50 reliant la virole externe 42 au moyeu 44 et jouant un rôle structural. La virole externe 42 s'étend autour du canal d'écoulement de flux secondaire 26, tandis que le moyeu 44 s'étend radialement à l'intérieur de ce canal 26. Le moyeu 44 inclut une paroi annulaire externe de moyeu 52, une paroi annulaire interne de moyeu 54, d'autres aubes de redresseur 56 et d'autres bras 58, 60 reliant la paroi annulaire externe de moyeu 52 à la paroi annulaire interne de moyeu 54.

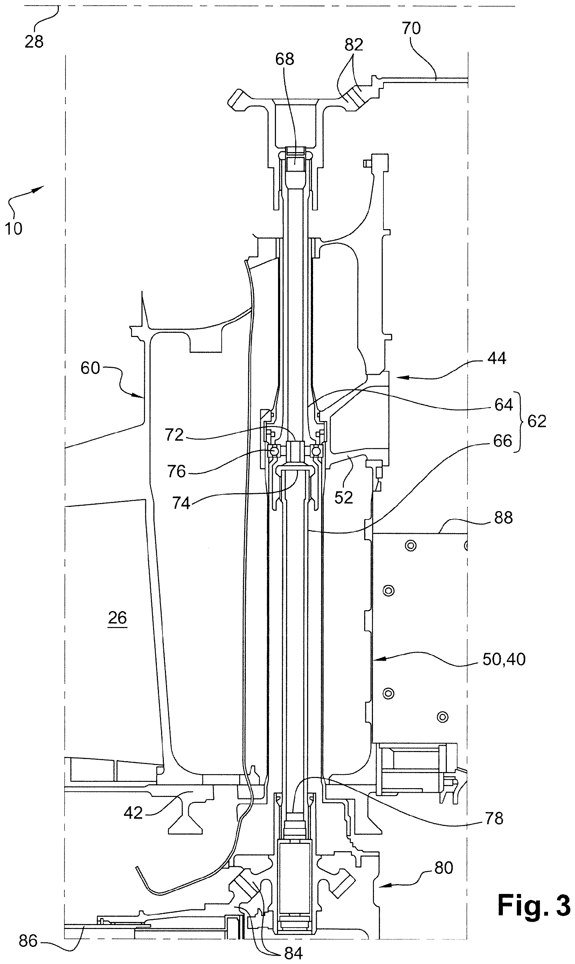

Les bras 50 et 60 situés en position basse, c'est-à-dire à « six heures », sont utilisés pour le passage d'un arbre de transmission 62 visible sur la figure 3, et peuvent en outre permettre de loger d'autres servitudes.

L'arbre de transmission 62 est un arbre en deux parties montées bout-à-bout, à savoir une partie radialement interne, dénommée « arbre primaire de transmission 64 », et une partie radialement externe, dénommée « arbre secondaire de transmission 66 ».

D'une manière générale, l'arbre de transmission 62 est prévu pour transmettre un mouvement de rotation entre l'un des arbres de rotor, en général l'arbre haute pression dans le cas d'une turbomachine à double corps, et une boîte d'engrenages *(« Accessory Gear Box* » *ou* « *AGB »)* reliée à des équipements auxiliaires tels qu'un démarreur de la turbomachine.

Comme le montre la figure 3, l'arbre primaire de transmission 64 présente une extrémité radialement interne 68 accouplée à l'arbre haute pression 70, et une extrémité radialement externe 72, et l'arbre secondaire de transmission 66 présente une extrémité radialement interne 74 accouplée à l'extrémité radialement externe 72 de l'arbre primaire de transmission 64 au niveau d'un palier 76 qui assure ainsi le guidage et le centrage de l'arbre de transmission 62, et une extrémité radialement externe 78 qui est par exemple accouplée à une boîte de renvoi d'angle 80 parfois dénommée *TGB (« Transfer Gear Box »)*, elle-même reliée à la boîte d'accessoires *AGB.* L'accouplement de l'extrémité radialement interne 68 à l'arbre haute pression 70 est par exemple réalisé au moyen d'une paire d'engrenages coniques 82. La boîte de renvoi d'angle 80 comporte également une paire d'engrenages coniques 84 reliant l'arbre secondaire 66 à un arbre de renvoi 86 lui-même relié à la boîte d'accessoires *AGB.*

Dans l'exemple illustré, les arbres de transmission primaire 64 et secondaire 66 s'étendent orthogonalement à l'axe 28 de la turbomachine et donc aux arbres de rotor de celle-ci. En variante, les arbres 64 et 66 peuvent s'étendre selon une direction inclinée par rapport à l'axe 28.

De plus, un kit de passage de servitudes 88, parfois dénommé *« kit engine »*, est fixé sur le côté aval du bras 50.

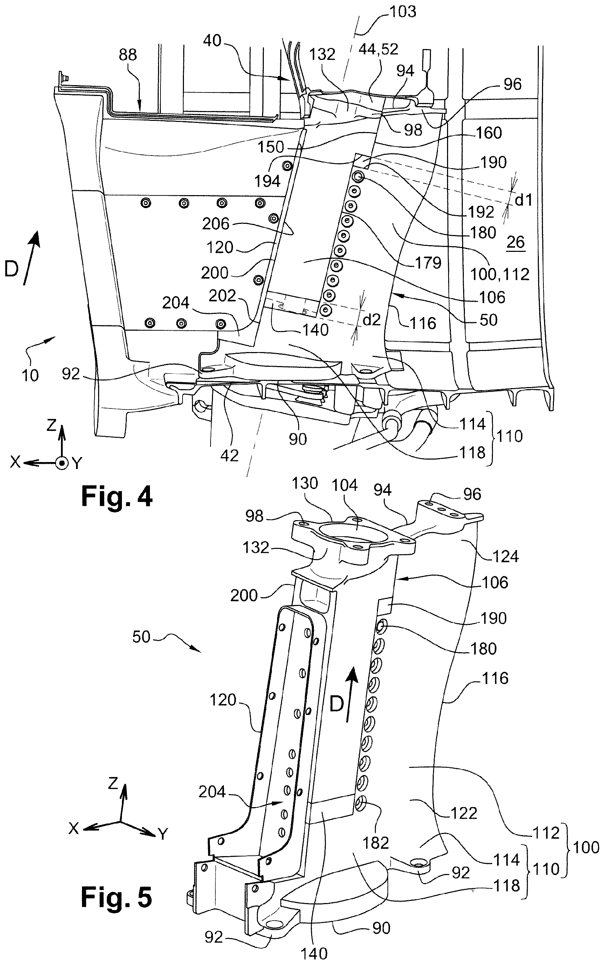

Les figures 4 à 10 concernent une turbomachine 10 selon un mode de réalisation préféré de l'invention, qui est globalement semblable à la turbomachine des figures 1 à 3 mais qui se distingue de celle-ci par la configuration du bras 50 qui loge l'arbre secondaire de transmission 66.

La figure 4 montre le bras 50 au sein du carter intermédiaire 40, tandis que les figures 5 à 10 illustrent ce bras 50 et ses constituants pris isolément.

Dans la suite de la présente description, la direction « longitudinale » est définie par référence au bras 50, et correspond donc à une direction radiale de la turbomachine définie par référence à l'axe 28. La direction « latérale » est une direction orthogonale à la direction longitudinale du bras, et correspond à la direction de l'axe 28.

Le bras 50 présente une première extrémité longitudinale 90 pourvue de premiers moyens de fixation 92 (figure 5) qui permettent la fixation du bras 50 à la virole externe 42 du carter intermédiaire 40 (figure 4). Le bras 50 présente une seconde extrémité longitudinale 94 pourvue de deuxièmes moyens de fixation 96, 98 (figure 5) qui permettent la fixation du bras 50 au moyeu 44 du carter intermédiaire 40 (figure 4).

D'une manière générale, le bras 50 comprend un corps 100 qui délimite au moins une partie d'un logement d'arbre 102 débouchant dans la première extrémité longitudinale 90 du bras et destiné au passage de l'arbre secondaire de transmission 66. Le logement d'arbre 102 est centré selon un axe 103 (figure 4) qui coïncide avec un axe de l'arbre secondaire de transmission 66 lorsque ce dernier est logé dans le logement d'arbre 102. Le bras 50 comporte également un logement de palier 104 débouchant dans le logement d'arbre 102 d'un côté et débouchant au niveau de la seconde extrémité longitudinale 94 du bras de l'autre côté. Ce logement de palier 104 est destiné à loger le palier 76. Le bras comprend en outre une pièce additionnelle 106 fixée de manière amovible sur le corps 100 et délimitant le logement de palier 104, comme cela apparaîtra plus clairement dans ce qui suit.

Le corps 100 est formé d'une base 110 et d'un montant 112 (figures 5, 6 et 7).

La base 110 comporte une première portion 114, agencée du côté d'une première extrémité latérale 116 du bras, et une seconde portion 118, agencée du côté d'une seconde extrémité latérale 120 du bras, opposée à la première extrémité latérale 116 (figure 5).

Dans le mode de réalisation préféré de l'invention, comme le montre plus particulièrement la figure 4, la première extrémité latérale 116 du bras est destinée à être située d'un côté amont dans la turbomachine et correspond à un bord d'attaque du bras, alors que la seconde extrémité latérale 120 du bras est destinée à être située d'un côté aval. Le corps 100 présente globalement une forme évasée dans la direction allant de la première extrémité latérale 116 vers la seconde extrémité latérale 120.

La base 110 présente des oreilles de fixation qui constituent les premiers moyens de fixation 92 précités (figures 5 à 7).

Le montant 112 présente, d'un côté, une première extrémité longitudinale 122 raccordée à la première portion 114 de la base 110, et, d'un côté opposé, une seconde extrémité longitudinale 124 présentant par exemple des oreilles de fixation qui constituent une partie 96 des deuxièmes moyens de fixation précités.

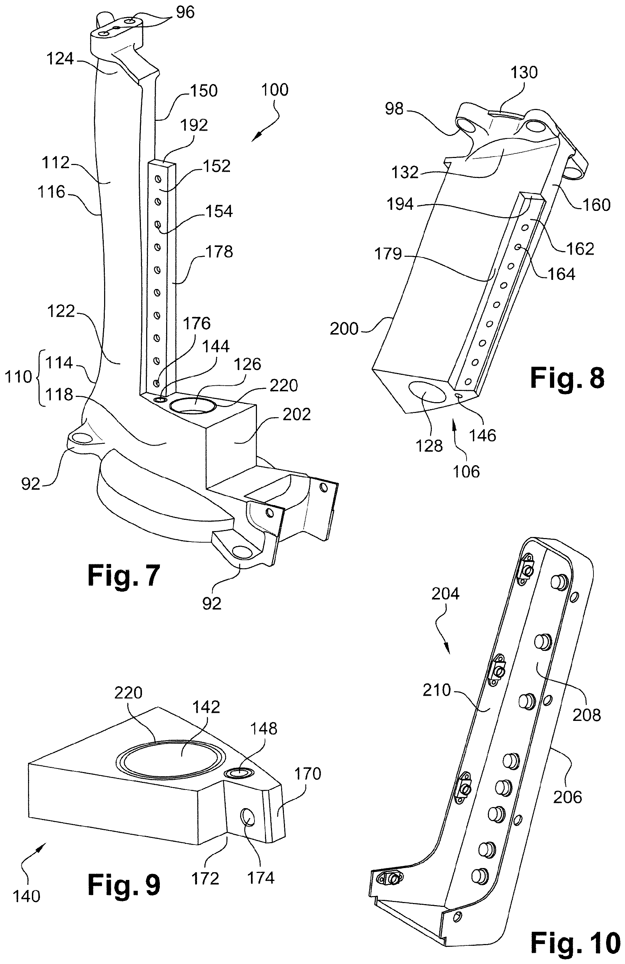

Par ailleurs, la base 110 intègre un orifice traversant qui forme une première section 126 du logement d'arbre 102 (figure 7).

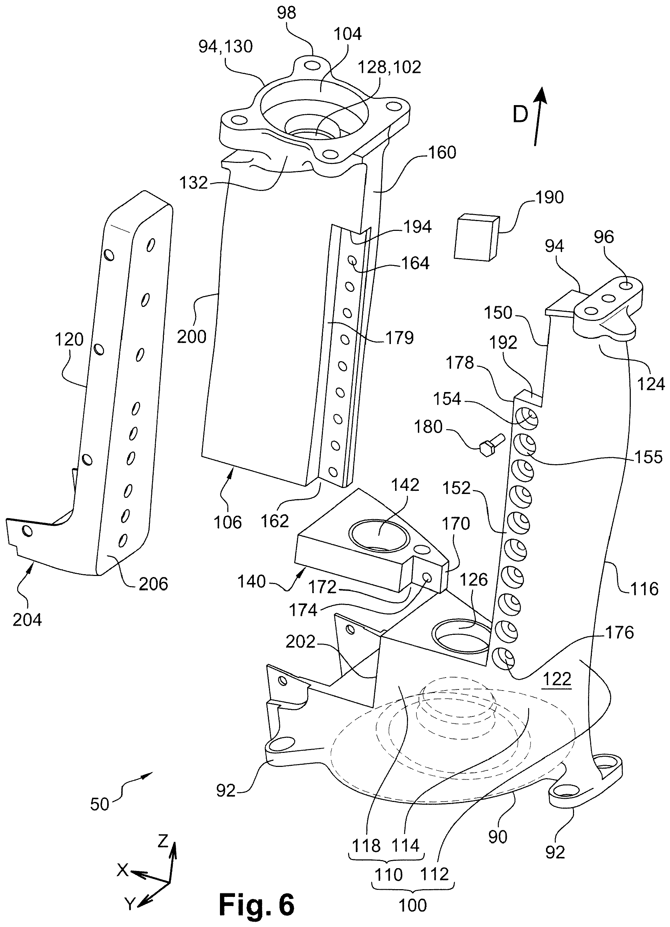

La pièce additionnelle 106 (figures 5, 6 et 8) intègre un orifice traversant qui forme une deuxième section 128 du logement d'arbre 102, et qui s'élargit au niveau d'une extrémité longitudinale 130 de la pièce, agencée du côté de la seconde extrémité longitudinale 94 du bras, de manière à former le logement de palier 104 (figures 5 et 6).

A titre d'exemple, la pièce additionnelle 106 est de section grossièrement triangulaire, et se termine au niveau de l'extrémité longitudinale 130 par une portion cylindrique de révolution 132 dans laquelle est formée la partie élargie de l'orifice traversant qui forme le logement de palier 104.

Par ailleurs, le bras 50 comporte une cale 140 interposée entre la base 110 et la pièce additionnelle 106 (figure 5). Cette cale 140 comporte un orifice traversant formant une troisième section 142 du logement d'arbre 102 (figure 9).

Dans l'exemple illustré, la base 110, la pièce additionnelle 106 et la cale 140 comportent d'autres orifices traversants respectifs 144, 146, 148 alignés et formant un conduit de lubrification (figures 7 à 9).

En considérant de nouveau le corps 100 du bras 50 (figure 7), il est à noter que le montant 112 présente une première surface 150 ainsi qu'une platine de fixation 152 faisant saillie au-delà de la première surface 150. La platine de fixation 152 comporte des premiers orifices de fixation 154, qui sont de préférence chacun munis d'un lamage 155 (figure 6) ou d'un fraisage pour loger une tête de vis correspondante.

La pièce additionnelle 106 présente une deuxième surface 160, ainsi qu'un premier évidement 162 débouchant dans la deuxième surface 160 (figure 8). La pièce additionnelle 106 comporte en outre des deuxièmes orifices de fixation 164 qui débouchent dans le premier évidement 162.

La cale 140 comporte une troisième surface 170, un deuxième évidement 172 débouchant dans la troisième surface 170, et un troisième orifice de fixation 174 (figure 9).

De plus, la platine de fixation 152 comporte un quatrième orifice de fixation 176, et présente une quatrième surface 178. Le premier évidement 162 présente une surface de fond 179.

La deuxième surface 160 de la pièce additionnelle 106 et la troisième surface 170 de la cale 140 sont appliquées sur la première surface 150 du corps 100. De plus, la platine de fixation 152 est agencée dans le premier évidement 162 et dans le deuxième évidement 172, de sorte que chaque premier orifice de fixation 154 soit disposé dans le prolongement d'un deuxième orifice de fixation 164 correspondant et que le quatrième orifice de fixation 176 soit disposé dans le prolongement du troisième orifice de fixation 174 (figures 5 et 6). En outre, la quatrième surface 178 de la platine de fixation 152 est appliquée sur la surface de fond 179 du premier évidement 162.

De plus, le bras 50 comporte, pour chaque premier orifice de fixation 154, un premier organe de fixation 180 (figures 4 àt 6) qui traverse conjointement le premier orifice de fixation 154 et le deuxième orifice de fixation 164 correspondant de manière à fixer la pièce additionnelle 106 sur le corps 100 d'une manière réversible. Le bras comporte en outre un deuxième organe de fixation 182 (figure 5) qui traverse conjointement le troisième orifice de fixation 174 et le quatrième orifice de fixation 176 de manière à fixer la cale 140 sur le corps 100 d'une manière réversible.

La première surface 150, la deuxième surface 160, la quatrième surface 178 et la surface de fond 179 constituent ainsi des surfaces de contact par lesquelles le montant 112 et la pièce additionnelle 106 sont mutuellement en contact. Ces surfaces de contact sont, d'une manière générale, conformées pour permettre un déplacement de la pièce additionnelle 106 en direction de la base 110, parallèlement à l'axe 103 du logement d'arbre, lorsque la cale a été retirée. Dans l'exemple illustré, les surfaces 150, 160, 170, 178, 179 s'étendent ainsi parallèlement à l'axe 103 du logement d'arbre 102.

Comme le laissent apercevoir les figures 4 et 5, le premier évidement 162 s'étend au-delà de la platine de fixation 152 dans une direction D d'éloignement de la base 110, parallèlement à l'axe 103 du logement d'arbre 102. De plus, comme le montre la figure 4, l'étendue d1 du premier évidement 162 au-delà de la platine de fixation 152 selon une direction parallèle à l'axe 103 du logement d'arbre 102, et l'étendue d2 de la cale 140 selon cette même direction, sont supérieures à une distance de désaccouplement du palier 76 et de l'arbre primaire de transmission 64. La « distance de désaccouplement » est la distance dont il est nécessaire de déplacer le palier 76 par rapport à l'arbre primaire de transmission 64 pour obtenir le désaccouplement de ces éléments.

Ces caractéristiques préférentielles permettent d'autoriser un coulissement de la pièce additionnelle 106 le long du montant 112 lorsque la cale 140 a été retirée.

En variante, le déplacement de la pièce additionnelle 106 peut être opéré en rapprochant la pièce additionnelle 106 de la base 110 tout en éloignant la pièce additionnelle 106 du montant 112.

En outre, le bras 50 comporte un obturateur 190 (figures 4 à 6) agencé dans le premier évidement 162 à côté de la platine de fixation 152, de manière à recouvrir la pièce additionnelle 106 depuis une extrémité longitudinale 192 de la platine de fixation 152, située du côté de la seconde extrémité longitudinale 124 du montant 112 (figures 4 et 7), jusqu'à une extrémité longitudinale 194 du premier évidement 162, située de ce même côté (figures 4 et 8), et depuis la surface de fond 179 du premier évidement 162, qui est située du côté de la seconde extrémité latérale 120 du bras, jusqu'à la première surface 150 (figures 4 et 7). L'obturateur 190 obture ainsi la région de l'évidement située au-delà de la platine de fixation 152 dans la direction D d'éloignement de la base, et permet par conséquent d'assurer la continuité aérodynamique de la surface externe du bras 50. L'obturateur 190 est fixé à la pièce additionnelle 106, par exemple au moyen d'une vis de fixation (non visible sur les figures).

Par ailleurs, la pièce additionnelle 106 comporte une cinquième surface 200 située du côté opposé au côté de la deuxième surface 160, et la base 110 présente une sixième surface 202 située dans le prolongement de la cinquième surface 200 lorsque la pièce additionnelle 106 est assemblée au corps 100. De plus, le bras 50 comprend une platine d'interface 204 présentant une septième surface 206 appliquée conjointement sur les cinquième et sixième surfaces 200, 202 (figures 4 et 6) et fixée sur au moins l'une de ces surfaces 200, 202, par exemple au moyen de vis de fixation (non visibles sur les figures). La platine d'interface 204 prend par exemple la forme d'une plaque 208 en forme d'équerre munie d'un rebord de raidissement 210 sensiblement orthogonal à la plaque 208 (figure 10).

La platine d'interface 204 permet de renforcer le maintien de la pièce additionnelle 106 sur le corps 100 et offre en outre une interface de fixation pour un kit de passage de servitudes 88 (figure 4) qui est par exemple d'un type conventionnel.

Dans la turbomachine 10 de la figure 4 intégrant le bras 50, l'arbre secondaire de transmission 66 s'étend dans le logement d'arbre 102 formé des première, deuxième et troisième sections 126, 128 et 142 qui sont alignées, et le palier 76 est logé dans le logement de palier 104 ménagé dans la pièce additionnelle 106.

De manière préférentielle, la base 110 et la cale 140 sont munies de joints toriques 220 disposés respectivement autour des orifices traversants 126, 128, 142, 144, 146, 148 au niveau des contacts entre la base 110 et la cale 140 et entre la cale 140 et la pièce additionnelle 106 (figures 7 et 9).

Le palier 76 peut être avantageusement démonté au moyen d'un procédé de démontage comprenant les étapes consistant à :
- le cas échéant, démonter le kit de passage de servitudes 88 fixé sur la platine d'interface 204 ;
- démonter la platine d'interface 204, le cas échéant en dévissant les vis de fixation correspondantes ;
- retirer l'arbre secondaire de transmission 66 en le déplaçant en translation selon l'axe 103 du logement d'arbre 102, depuis la première extrémité 90 du bras 50 ; le cas échéant, cette étape peut nécessiter le démontage de la boîte de renvoi d'angle 80 ;
- démonter les premier(s) et deuxième(s) organes de fixation 180, 182 ainsi que l'obturateur 190 ;
- retirer la cale 140 et induire un déplacement de la pièce additionnelle 106 vers la base 110 du corps 100, permettant d'accéder au palier 76 afin de le désaccoupler de l'arbre primaire de transmission 64 ;
- retirer la pièce additionnelle 106 et le palier 76.

Il peut être alors également possible de retirer l'arbre primaire de transmission 64.

L'assemblage ou le réassemblage du bras 50 et de l'arbre de transmission 62 peut être réalisé en mettant en œuvre les mêmes étapes dans l'ordre inverse.

## Revendications

1. Bras (50) pour carter (40) de turbomachine (10), présentant une première extrémité longitudinale (90) pourvue de premiers moyens de fixation (92) destinés à être fixés à une virole externe de carter (42), et une seconde extrémité longitudinale (94) pourvue de deuxièmes moyens de fixation (96, 98) destinés à être fixés à un moyeu de carter (44), le bras (50) comprenant un logement d'arbre (102) débouchant au niveau de la première extrémité longitudinale (90) du bras pour loger un arbre secondaire de transmission (66) de turbomachine, et le bras (50) étant **caractérisé en ce que** :
- le bras (50) comprend un corps (100) formé d'une base (110) et d'un montant (112),
- la base (110) intègre les premiers moyens de fixation (92), et présente une première portion (114), agencée du côté d'une première extrémité latérale (116) du bras (50), et une seconde portion (118), agencée du côté d'une seconde extrémité latérale (120) du bras (50) opposée à la première extrémité latérale (116) et intégrant une première section (126) du logement d'arbre (102),
- le montant (112) présente une première extrémité longitudinale (122) raccordée à la première portion (114) de la base (110), et une seconde extrémité longitudinale (124) opposée à la première extrémité longitudinale (122) et intégrant une partie (96) des deuxièmes moyens de fixation,
- le bras (50) comprend une pièce additionnelle (106) fixée de manière amovible sur le corps (100),
- la pièce additionnelle (106) intègre une deuxième section (128) du logement d'arbre (102) et délimite un logement de palier (104) débouchant dans le logement d'arbre (102) et destiné à loger un palier (76),
- le bras (50) comprend une cale (140) interposée entre la base (110) et la pièce additionnelle (106),
- la cale (140) intègre une troisième section (142) du logement d'arbre (102), et
- le montant (112) et la pièce additionnelle (106) sont mutuellement en contact par l'intermédiaire de surfaces de contact (150, 160, 178, 179) conformées pour permettre un déplacement de la pièce additionnelle (106) en direction de la base (110) lorsque le bras (50) est dépourvu de la cale (140).

2. Bras selon la revendication 1, dans lequel les surfaces de contact (150, 160, 178, 179) sont conformées pour permettre un déplacement de la pièce additionnelle (106) en direction de la base (110) parallèlement à un axe (103) du logement d'arbre lorsque le bras (50) est dépourvu de la cale (140).

3. Bras selon la revendication 2,
dans lequel :
- les surfaces de contact comprennent une première surface (150) formée sur le montant (112) et une deuxième surface (160) formée sur la pièce additionnelle (106) et appliquée contre la première surface (150),
- le montant (112) comporte une platine de fixation (152) faisant saillie au-delà de la première surface (150),
- la pièce additionnelle (106) présente un premier évidement (162) débouchant dans la deuxième surface (160), et dans lequel la platine de fixation (152) est agencée,
- le premier évidement (162) s'étend au-delà de la platine de fixation (152) dans une direction (D) d'éloignement de la base (110) parallèle à l'axe (103) du logement d'arbre,
- la platine de fixation (152) comporte au moins un premier orifice de fixation (154), la pièce additionnelle (106) comporte au moins un deuxième orifice de fixation (164), le bras (50) comportant en outre au moins un premier organe de fixation (180) traversant conjointement le premier orifice de fixation (154) et le deuxième orifice de fixation (164).

4. Bras selon la revendication 3, comportant en outre un obturateur (190) agencé dans le premier évidement (162) à côté de la platine de fixation (152) de manière à obturer une région de l'évidement située au-delà de la platine de fixation dans la direction (D) d'éloignement de la base (110).

5. Bras selon l'une quelconque des revendications 1 à 4, dans lequel le logement de palier (104) débouche dans la seconde extrémité longitudinale (94) du bras.

6. Turbomachine (10) pour aéronef, comprenant :
- un arbre de rotor (70) reliant des aubes de compresseur (32) à des aubes de turbine (34),
- un canal d'écoulement de flux secondaire (26),
- un carter (40) comprenant un moyeu de carter (44) agencé radialement vers l'intérieur par rapport au canal d'écoulement de flux secondaire (26), et une virole externe de carter (42) agencée radialement vers l'extérieur par rapport au canal d'écoulement de flux secondaire (26),
- un arbre primaire de transmission (64) et un arbre secondaire de transmission (66) agencés bout-à-bout et s'étendant selon une direction orthogonale ou inclinée par rapport à l'arbre de rotor (70), et
- un palier (76) permettant le guidage des arbres de transmission primaire (64) et secondaire (66),
et dans lequel :
- le carter (40) comprend un bras (50) selon l'une quelconque des revendications 1 à 5, dont les premiers moyens de fixation (92) sont fixés à la virole externe de carter (42) et les deuxièmes moyens de fixation (96, 98) sont fixés au moyeu de carter (44),
- l'arbre primaire de transmission (64) présente une extrémité radialement interne (68) accouplée à l'arbre de rotor (70), et une extrémité radialement externe (72),
- l'arbre secondaire de transmission (66) présente une extrémité radialement interne (74) accouplée à l'extrémité radialement externe (72) de l'arbre primaire de transmission (64) au niveau du palier (76),
- l'arbre secondaire de transmission (66) est logé dans le logement d'arbre (102) du bras (50), et
- le palier (76) est logé dans le logement de palier (104) du bras (50).

7. Turbomachine selon la revendication 6, dans laquelle le bras (50) est conforme à la revendication 3, et dans laquelle une étendue du premier évidement (162) au-delà de la platine de fixation (152), et une étendue de la cale (140), selon une direction parallèle à l'arbre primaire de transmission (64), sont supérieures à une distance de désaccouplement du palier (76) et de l'arbre primaire de transmission (64).

8. Procédé de démontage du palier (76) d'une turbomachine (10) selon la revendication 6 ou 7, comprenant les étapes consistant à :
- retirer l'arbre secondaire de transmission (66) depuis la première extrémité (90) du bras (50),
- retirer la cale (140),
- démonter la pièce additionnelle (106), puis
- déplacer la pièce additionnelle (106) vers la base (110) du corps (100) dans un espace précédemment occupé par la cale (140), puis
- désaccoupler le palier (76) et l'arbre primaire de transmission (64).

9. Procédé selon la revendication 8, dans lequel le bras (50) du carter (40) est conforme à la revendication 4, le procédé comprenant une étape consistant à démonter l'obturateur (190) préalablement à la l'étape consistant à déplacer la pièce additionnelle (106) vers la base (110).

10. Procédé selon la revendication 8 ou 9, comprenant une étape consistant à démonter une platine d'interface (204) préalablement fixée sur la base (110) du corps (100) et sur la pièce additionnelle (106) de manière à prendre en sandwich la pièce additionnelle (106) avec le montant (112).

## Patentansprüche

1. Arm (50) für ein Gehäuse (40) einer Turbomaschine (10), das mit einem ersten Endabschnitt in Längsrichtung (90) mit ersten Befestigungseinrichtungen (92) zur Befestigung an einem äußeren Gehäuseabdeckband (42) sowie mit einem zweiten Endabschnitt in Längsrichtung (94) mit zweiten Befestigungseinrichtungen (96, 98) zur Befestigung an einer Gehäusenabe (44) ausgestattet ist, wobei der Arm (50) eine Wellenaufnahme (102) umfasst, die auf Höhe des ersten Endabschnitts in Längsrichtung (90) des Arms mündet, um eine sekundäre Abtriebswelle (66) für eine Turbomaschine aufzunehmen, und der Arm (50) **dadurch gekennzeichnet ist, dass**:
- der Arm (50) ein Hauptstück (100) umfasst, das aus einer Basis (110) und einer Säule (112) besteht,
- sich an der Basis (110) die ersten Befestigungseinrichtungen (92) befinden und die Basis über einen ersten Teilbereich (114) verfügt, der auf der Seite eines ersten seitlichen Endabschnitts (116) des Arms (50) angeordnet ist, sowie über einen zweiten Teilbereich (118), der auf der Seite eines zweiten seitlichen Endabschnitts (120) des Arms (50) gegenüber dem ersten seitlichen Endabschnitt (116) angeordnet ist und einen ersten Teilabschnitt (126) der Wellenaufnahme (102) beinhaltet,
- die Säule (112) über einen ersten Endabschnitt in Längsrichtung (122) verfügt, der mit dem ersten Teilbereich (114) der Basis (110) verbunden ist, sowie über einen zweiten Endabschnitt in Längsrichtung (124) gegenüber dem ersten Endabschnitt in Längsrichtung (122), der eine Teilmenge (96) der zweiten Befestigungseinrichtungen beinhaltet,
- der Arm (50) ein Zusatzteil (106) umfasst, das abnehmbar am Hauptstück (100) befestigt ist,
- das Zusatzteil (106) einen zweiten Teilabschnitt (128) der Wellenaufnahme (102) beinhaltet und ein Lagergehäuse (104) begrenzt, das in die Wellenaufnahme (102) mündet und für die Aufnahme eines Lagers (76) vorgesehen ist,
- der Arm (50) ein Füllstück (140) umfasst, das zwischen der Basis (110) und dem Zusatzteil (106) angeordnet ist,
- das Füllstück (140) einen dritten Teilabschnitt (142) der Wellenaufnahme (102) beinhaltet und
- sich die Säule (112) und das Zusatzteil (106) an Kontaktflächen (150, 160, 178, 179) berühren, die so gestaltet sind, dass sich das Zusatzteil (106) in Richtung der Basis (110) verschieben kann, wenn das Füllstück (140) nicht in den Arm (50) eingesetzt ist.

2. Arm gemäß Anspruch 1, bei dem die Kontaktflächen (150, 160, 178, 179) so gestaltet sind, dass sich das Zusatzteil (106) parallel zu einer Achse (103) der Wellenaufnahme in Richtung der Basis (110) verschieben kann, wenn das Füllstück (140) nicht in den Arm (50) eingesetzt ist.

3. Arm gemäß Anspruch 2, bei dem:
- die Kontaktflächen eine erste Fläche (150) an der Säule (112) und eine zweite Fläche (160) am Zusatzteil (106) umfassen, wobei die zweite Fläche (160) an der ersten Fläche (150) anliegt,
- die Säule (112) eine Befestigungsplatte (152) umfasst, die über die erste Fläche (150) hinausragt,
- das Zusatzteil (106) über eine erste Aussparung (162) verfügt, die in der zweiten Fläche (160) mündet und an der die Befestigungsplatte (152) angesetzt wird,
- sich die erste Aussparung (162) in einer von der Basis (110) wegführenden Richtung (D) parallel zur Achse (103) der Wellenaufnahme über die Befestigungsplatte (152) hinaus erstreckt,
- die Befestigungsplatte (152) mindestens eine erste Befestigungsbohrung (154) umfasst, das Zusatzteil (106) mindestens eine zweite Befestigungsbohrung (164) umfasst und der Arm (50) überdies mindestens ein erstes Bauelement zur Befestigung (180) umfasst, das sowohl die erste Befestigungsbohrung (154) als auch die zweite Befestigungsbohrung (164) durchdringt.

4. Arm gemäß Anspruch 3, der überdies ein Verschlussstück (190) umfasst, das neben der Befestigungsplatte (152) so in die erste Aussparung (162) eingesetzt wird, dass es einen Teilbereich der Aussparung verschließt, der sich in von der Basis (110) wegführender Richtung (D) jenseits der Befestigungsplatte befindet.

5. Arm gemäß einem der Ansprüche 1 bis 4, bei dem das Lagergehäuse (104) in den zweiten Endabschnitt in Längsrichtung (94) des Arms mündet.

6. Turbomaschine (10) für ein Luftfahrzeug, die Folgendes umfasst:
- eine Laufradwelle (70), die Kompressorschaufeln (32) mit Turbinenschaufeln (34) verbindet,
- einen Sekundärstrom-Abzugskanal (26),
- ein Gehäuse (40), das eine Gehäusenabe (44), die im Verhältnis zum Sekundärstrom-Abzugskanal (26) radial in Innenrichtung angeordnet ist, sowie ein äußeres Gehäuseabdeckband (42), das im Verhältnis zum Sekundärstrom-Abzugskanal (26) radial in Außenrichtung angeordnet ist, umfasst,
- eine primäre Antriebswelle (64) und eine sekundäre Abtriebswelle (66), deren Enden aneinander anliegen und die sich in orthogonaler oder schräger Richtung zur Laufradwelle (70) erstrecken, sowie
- ein Lager (76), in dem die primäre Antriebswelle (64) und die sekundäre Abtriebswelle (66) geführt werden können, und bei der:
- das Gehäuse (40) einen Arm (50) nach einem der Ansprüche 1 bis 5 umfasst, dessen erste Befestigungseinrichtungen (92) an dem äußeren Gehäuseabdeckband (42) befestigt sind und dessen zweite Befestigungseinrichtungen (96, 98) an der Gehäusenabe (44) befestigt sind,
- die primäre Antriebswelle (64) über einen mit der Laufradwelle (70) verkoppelten radial innen liegenden Endabschnitt (68) sowie über einen radial außen liegenden Endabschnitt (72) verfügt,
- die sekundäre Abtriebswelle (66) über einen radial innen liegenden Endabschnitt (74) verfügt, der auf Höhe des Lagers (76) mit dem radial außen liegenden Endabschnitt (72) der Antriebswelle (64) verkoppelt ist,
- die Abtriebswelle (66) in der Wellenaufnahme (102) des Arms (50) gelagert ist und
- das Lager (76) im Lagergehäuse (104) des Arms (50) gelagert ist.

7. Turbomaschine gemäß Anspruch 6, bei der der Arm (50) Anspruch 3 entspricht und bei der eine Ausdehnung der ersten Aussparung (162) jenseits der Befestigungsplatte (152) und eine Ausdehnung des Füllstücks (140) in einer parallel zur Antriebswelle (64) verlaufenden Richtung größer sind als die Entkopplungsstrecke des Lagers (76) und der primären Antriebswelle (64).

8. Verfahren zum Ausbauen des Lagers (76) einer Turbomaschine (10) gemäß Anspruch 6 oder 7, das die folgenden Schritte umfasst:
- Herausnehmen der sekundären Abtriebswelle (66) am ersten Endabschnitt (90) des Arms (50),
- Herausnehmen des Füllstücks (140),
- Ausbauen des Zusatzteils (106) sowie anschließend
- Versetzen des Zusatzteils (106) zur Basis (110) des Hauptstücks (100) in einen Raum, der zuvor von dem Füllstück (140) eingenommen wurde, sowie anschließend
- Entkoppeln des Lagers (76) und der primären Antriebswelle (64).

9. Verfahren gemäß Anspruch 8, bei dem der Arm (50) des Gehäuses (40) dem Anspruch 4 entspricht, wobei das Verfahren einen Schritt umfasst, der im Ausbauen des Verschlussstücks (190) vor dem Schritt des Versetzens des Zusatzteils (106) zur Basis (110) besteht.

10. Verfahren gemäß Anspruch 8 oder 9, das einen Schritt umfasst, der im Ausbauen einer Trennplatte (204) besteht, die zuvor so an der Basis (110) des Hauptstücks (100) und an dem Zusatzteil (106) befestigt war, dass das Zusatzteil (106) sandwichartig zwischen ihr und der Säule (112) eingeklemmt war.

## Claims

1. Arm (50) for a casing (40) of a turbine engine (10), having a first longitudinal end (90) provided with first fixing means (92) intended to be fixed to an external casing collar (42), and a second longitudinal end (94) provided with second fixing means (96, 98) intended to be fixed to a casing hub (44), the arm (50) comprising a shaft housing (102) emerging at the first longitudinal end (90) of the arm in order to house a secondary turbine-engine transmission shaft (66), and the arm (50) being **characterised in that**:
- the arm (50) comprises a body (100) formed by a base (110) and an upright (112),
- the base (110) includes the first fixing means (92) and has a first portion (114) arranged on the same side as a first lateral end (116) of the arm (50), and a second portion (118) arranged on the same side as a second lateral end (120) of the arm (50) opposite to the first lateral end (116) and including a first section (126) of the shaft housing (102),
- the upright (112) has a first longitudinal end (122) connected to the first portion (114) of the base (110), and a second longitudinal end (124) opposite to the first longitudinal end (122) and including a part (96) of the second fixing means,
- the arm (50) comprises an additional piece (106) fixed removably to the body (100),
- the additional piece (106) includes a second section (128) of the shaft housing (102) and delimits a bearing housing (104) emerging in the shaft housing (102) and intended to house a bearing (76),
- the arm (50) comprises a spacer (140) interposed between the base (110) and the additional piece (106),
- the spacer (140) includes a third section (142) of the shaft housing (102), and
- the upright (112) and the additional piece (106) are mutually in contact by means of contact surfaces (150, 160, 178, 179) conformed so as to allow movement of the additional piece (106) towards the base (110) when the arm (50) is devoid of the spacer (140).

2. Arm according to claim 1, wherein the contact surfaces (150, 160, 178, 179) are conformed so as to allow movement of the additional piece (106) towards the base (110) parallel to an axis (103) of the shaft housing when the arm (50) is devoid of the spacer (140).

3. Arm according to claim 2,
wherein:
- the contact surfaces comprise a first surface (150) formed on the upright (112) and a second surface (160) formed on the additional piece (106) and applied against the first surface (150),
- the upright (112) comprises a fixing plate (152) projecting beyond the first surface (150),
- the additional piece (106) has a first recess (162) emerging in the second surface (160), and in which the fixing plate (152) is arranged,
- the first recess (162) extends beyond the fixing plate (152) in a direction (D) of moving away from the base (110) parallel to the axis (103) of the shaft housing,
- the fixing plate (152) comprises at least a first fixing orifice (154), the additional piece (106) comprises at least a second fixing orifice (164),
the arm (50) further comprising at least a first fixing member (180) conjointly passing through the first fixing orifice (154) and the second fixing orifice (164).

4. Arm according to claim 3, further comprising an obturator (190) arranged in the first recess (162) alongside the fixing plate (152) so as to close off a region of the recess situated beyond the fixing plate in the direction (D) of moving away from the base (110).

5. Arm according to any of claims 1 to 4, wherein the bearing housing (104) emerges in the second longitudinal end (94) of the arm.

6. Turbine engine (10) for an aircraft, comprising:
- a rotor shaft (70) connecting compressor blades (32) to turbine blades (34),
- a secondary flow channel (26),
- a casing (40) comprising a casing hub (44) arranged radially towards the inside with respect to the secondary flow channel (26), and an external casing collar (42) arranged radially towards the outside with respect to the secondary flow channel (26),
- a primary transmission shaft (64) and a secondary transmission shaft (66) arranged end to end and extending in a direction orthogonal or inclined with respect to the rotor shaft (70), and
- a bearing (76) for guiding the primary (64) and secondary (66) transmission shafts,
and wherein:
- the casing (40) comprises an arm (50) according to any one of claims 1 to 5, the first fixing means (92) of which are fixed to the external casing (42), and the second fixing means (96, 98) of which are fixed to the casing hub (44),
- the primary transmission shaft (64) has a radially internal end (68) coupled to a rotor shaft (70), and a radially external end (72),
- the secondary transmission shaft (66) has a radially internal end (74) coupled to the radially external end (72) of the primary transmission shaft (64) at the bearing (76),
- the secondary transmission shaft (66) is housed in the shaft housing (102) of the arm (50), and
- the bearing (76) is housed in the bearing housing (104) of the arm (50).

7. Turbine engine according to claim 6, wherein the arm (50) is in accordance with claim 3, and wherein an extent of the first recess (162) beyond the fixing plate (152) and an extent of the spacer (140) in a direction parallel to a primary transmission shaft (64) are greater than an uncoupling distance of the bearing (76) and primary transmission shaft (64).

8. Method for removing the bearing (76) of a turbine engine (10) according to claim 6 or claim 7, comprising the steps consisting of:
- removing the secondary transmission shaft (66) from the first end (90) of the arm (50),
- removing the spacer (140),
- removing the additional piece (106), then
- moving the additional piece (106) towards the base (110) of the body (100) in a space previously occupied by the spacer (140), then
- uncoupling the bearing (76) and primary transmission shaft (64).

9. Method according to claim 8, wherein the arm (50) of the casing (40) is in accordance with claim 4, the method comprising a step consisting of removing the obturator (190) prior to the step consisting of moving the additional piece (106) towards the base (110).

10. Method according to claim 8 or claim 9, comprising a step consisting of removing an interface plate (204) previously fixed to the base (110) of the body (100) and to the additional piece (106) so as to sandwich the additional piece (106) with the upright (112).
